# EUROPEAN PATENT APPLICATION

(11) **EP 2 573 484 A2**
(43) Date of publication of application: **27.03.2013**
(21) Application number: 12174575.6
(22) Date of filing: 02.07.2012
(51) Int. Cl.: F24J 2/07, F24J 2/34

(54) **Integrated solar receiver - thermal storage system**

(30) Priority: 26.09.2011 US 201113245179
(71) Applicant: The Cyprus Institute, 1645 Nicosia (CY)
(72) Inventor: Papanicolas, Costas N., Strovolos (CY)
(74) Representative: Valea AB

(57) **Abstract**

The invention relates to an integral, thermal storage and receiver system. The system includes a heat storage medium (16) and a receiver (12) for capturing incoming radiation (10), the receiver (12) being in thermal contact with the heat storage medium (16) and forming an integral part of it. In a preferred embodiment, the storage medium (16) is a molten salt and the receiver (12) is a black body cavity formed of polyhedral structures and immersed within the molten salt (16).

## Description

### TECHNICAL FIELD

The present invention relates to an integral solar receiver - thermal storage system.

### BACKGROUND OF THE INVENTION

Efficient and economically competitive capturing of solar radiation and its storage is one of the great challenges of the 21^{st} century. A breakthrough in energy storage will have an enormous impact on the economics and employment of renewable energy sources. Such a breakthrough would ameliorate the intermittent character of a number of important renewable energy sources such as wind, photovoltaic and solar-thermal. A number of options are being pursued worldwide. Thermal storage is one of the leading options critically important for the employment and commercialization of Concentrated Solar Power (CSP) facilities.

The most commonly used thermal storage systems today use salts as the storage medium; in addition to salts, other storage media such as concrete blocks, aggregates, metals and graphite are being employed or are being investigated. In solar energy applications and in particular in Concentrated Solar Power systems the thermal energy collected at the receiver is transferred to the storage device/medium via a working fluid (in liquid or gaseous phase).

Present day designs of CSP plants with thermal storage are complex. They usually involve two tanks containing the storage medium such as molten salt, one tank storing the medium at a high temperature and another tank storing the medium at a lower temperature after the heat extracting process has occurred. The two tanks connect with each other and the solar collector system with a heat transfer working fluid. Such systems are often used with a receiver placed on top of a tower or parabolic troughs. These prior art designs usually employ long piping runs often at high pressure and/or temperature. Such systems also require difficult pumping schemes to move the working fluid. These complex prior art systems often encounter technical problems along with high operating and maintenance costs. These designs have not, therefore, been proven for long term reliability and continuous operation. Moreover the physical and thermal separation of the receiver from the storage medium increases heat losses and results to lower efficiency.

One prior art thermal storage design motivated largely in order to address some of the aforementioned difficulties is the "Concentrated Solar Power on Demand (CSPoND)" innovative design of Slocum et al., US patent application publication number US2011/0067690 A1. It uses an open volumetric receiver in which the solar energy collector and the storage unit are integrated. In this CSPoND scheme the storage medium (nitrate or chloride salt) receives directly the concentrated solar input from a heliostat field without the need for a secondary, beam-down optics system. Although this design is significantly simpler than other prior art designs and it could provide significant savings in capital, operating and maintenance costs, it presents a number of disadvantages. The melting of the salt is achieved by heat received at the top of the salt mass, but heat penetration into the entire salt mass has been successful only for containers having a small depth. Natural convection that would insure a continuous circulation of heat throughout the thermal storage medium has not been demonstrated at a satisfactory level. Further, the open surface of the salt that receives the thermal energy reflects a substantial amount of heat that is lost, unless an elaborate-designed lid is constructed to allow incoming radiation but minimize heat losses to the environment. The fact that the salt is open to the atmosphere presents environmental concerns that complicate its usage. The very concept also requires beam-down geometry that can be restrictive although sometimes advantageous in certain geometries and in hilly terrain.

It is therefore an object of the present invention to provide simultaneously an efficient capture and thermal energy storage for solar radiation, in an integrated device that does not require a separate working fluid and its attendant complexities and is environmentally friendly and can be used in any orientation (e.g. beam - up or beam - down geometries).

### SUMMARY OF THE INVENTION

The Integrated receiver - thermal storage system of the invention comprises of a receiver for capturing incoming radiation fused integrally with a heat storage medium.

The receiver is in direct thermal contact with the heat storage medium, it is actually fused in one device. In a preferred embodiment the storage medium is a mixture of molten salts and the receiver is a Black Body Cavity; other embodiments are possible both in terms of receiver (e.g. planar geometry receiver instead of cavity) and other storage media (e.g. concrete, metals, aggregates or graphite instead of salts). In a most preferred embodiment, the black body cavity itself is immersed within the molten salt; its surface forms part of the containment vessel of the storage vessel of the molten salt. In this embodiment, the black body cavity includes fins of high thermal conductivity material in thermal contact with the heat storage medium which are designed so as to optimally distribute the heat to the medium. If required, the distribution of heat into the storage medium can be augmented via stirrers or other devices currently employed in such storage devices.

The black body cavity has a shape selected to maximize the capturing of the incoming radiation. In an indicative embodiment, the black body cavity includes a number (e.g. three) communicating polyhedral chambers of increasing volume.

The black body cavity has an opening, small in relation to the size of the black body cavity itself, to receive the incoming solar radiation. A solar concentrator may be provided at the opening to further enhance the performance of the system and in most cases will be an integral part of the design. The opening of the cavity may be windowless or covered by a transparent to solar radiation window to reduce thermal losses, thus increasing the efficiency of the device.

In yet another embodiment, it is possible to consider the device described above as the receiver and high temperature tank of the two-tank conventional molten salt storage system.

### BRIEF DESCRIPTION OF THE DRAWINGS

Fig. 1 is a schematic representation of a black body cavity receiving a ray of incoming radiation.
Fig. 2 is a cross-sectional view of a preferred embodiment of the invention disclosed herein.
Figs. 3a, b and c are schematic illustrations of the black body cavity located within a thermal storage medium.

### DETAILED DESCRIPTION OF INVENTION

First of all, some of the theory on which the present invention is based will be discussed. Black body systems (or perfect absorbers) are systems that emit radiation the intensity and spectral characteristics of which depend only on their temperature. The irradiance (power per surface unit) of a black body follows Stefan's Law: I = σ T⁴ where I is the irradiance, σ is the Stefan-Boltzmann constant and T is the absolute temperature.

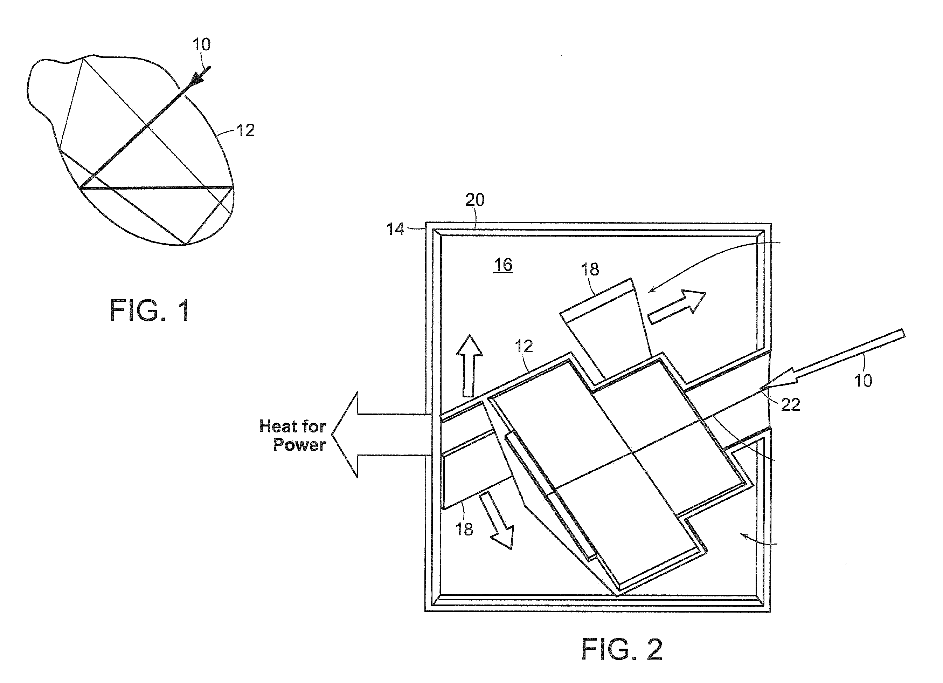

An approximation of black body behavior is achieved through the radiation emissions of an insulated cavity. As shown in Fig. 1, incoming radiation 10 is absorbed within a cavity 12 after a number of internal reflections which at the end result in the capture or absorption of the light. This absorption leads to thermal equilibrium within the cavity while the outgoing radiation from the cavity has the same spectrum as that of a black body at the same temperature.

With reference now to Fig. 2, an insulated container 14 contains a thermal storage medium such as salt 16 maintained within the insulated container 14. Immersed within the thermal storage medium (e.g. molten salt) 16 is a receiver (e.g. black body cavity) 12 that receives the solar input 10. The black body cavity 12 includes fins 18 to improve heat transfer from the black body cavity 12 into the molten salt 16. Heat is transferred from cavity 12 to salt 16 through fins for better and uniform heat transfer. The insulated container 14 includes a heat conductive metallic lining 20 for a more nearly uniform heat distribution.

The black body cavity 12 is open to the air through a small opening 22, the dimension of which is significantly smaller than the dimensions of the black body cavity 12. The shape of the black body cavity 12 is configured to maximize the efficient capturing of an incoming ray 10 and thus to insure maximum absorption.

In the embodiment in Fig. 2 the cavity 12 is in thermal contact with the heat storage medium 16 (e.g., molten salt). As it is expected that convection will be inadequate to equalize the temperature of the storage medium, this embodiment employs fins of a high thermal conductivity material (i.e., copper or other conductive material) in thermal contact with the thermally conductive inner layer 20 of the storage container 14..

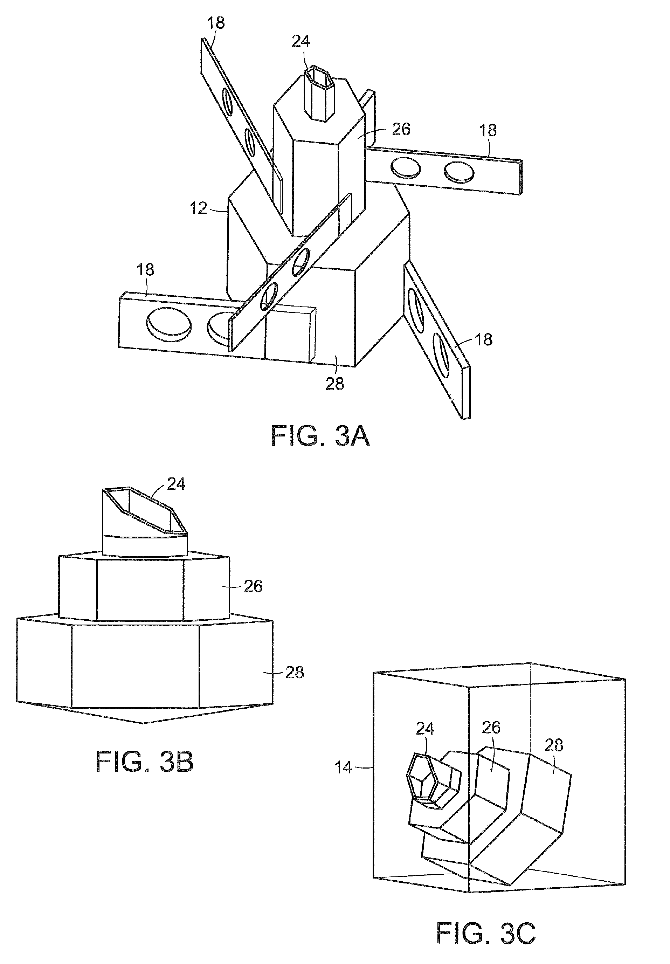

With reference now to Fig. 3, the black body cavity 12 includes three hexahedral chambers 24, 26 and 28 of increasing volume. Those of ordinary skill in the art will recognize that the embodiment shown in Fig. 3 is not necessarily optimal and other black body cavity geometries may be employed. Because in this embodiment the black body cavity 12 is immersed in molten salt, it should be constructed from a material that is compatible with this storage medium at high temperatures. A suitable material for the black body cavity 12 is heat conducting stainless steel. The fins 18 should be constructed from a material with high thermal conductivity and their placement should be in such a manner as to block heat from escaping while maximizing thermal transfer to the entire volume of the storage medium 16. The shape of the fins can be optimized and is not restricted to the exemplary shape shown in Fig. 3.

The invention disclosed herein offers a number of advantages as compared to a conventional system of separate receiver and storage devices thermally connected through the circulation of a heat transfer fluid of some variety, or an open volumetric receiver. The present design is compact with no moving parts and is completely passive. If necessary, mechanically induced circulation (not shown) may be provided in the insulated container 14. The system of the invention can be implemented with an optical window or windowless if required so as to eliminate problems presented by black body receivers that employ optical windows. The storage medium in the present invention is completely contained and isolated within the insulated container 14 and not in contact with the open environment. Thus the accumulation of dirt and foreign bodies in the storage medium and the emission to the environment of environmentally hazardous fumes are avoided. Further, the insulated container allows for the storage material to be kept within inert gases so as to control undesirable chemical reactions (even combustion for flammable media such as graphite) at a given temperature.

The submerged cavity having properly placed conductive fins insures that the entire volume of the storage medium is substantially uniformly heated. It is preferred, but not necessary, that the fins be an integral part of the mechanical structure that will be used to hold the black body cavity in place as well as to aid in heat transfer. Those of ordinary skill in the art will recognize that the orientation of the black body cavity 12 within the insulated container 14 is irrelevant. This flexibility in the orientation of the device allows for a number of implementation choices for the concentrated solar power system that vary from a conventional beam-up (tower) arrangement, including the important, for many cases, beam down geometry.

It is recognized that modifications and variations of the present invention will be apparent to those of ordinary skill in the art and it is intended that all such modifications and variations be included within the scope of the appended claims.

## Claims

1. An integral solar receiver-thermal storage system **characterized in** comprising:
a heat storage medium (16); and
a receiver (12) for capturing incoming radiation (10), the receiver (12) being in thermal contact with the storage medium (16).

2. The system of claim 1 wherein the storage medium (16) is a molten salt.

3. The system of claim 1 wherein the storage medium (16) is selected from the group consisting of concrete blocks, metals, aggregates and graphite.

4. The system of claim 2 wherein the receiver (12) is immersed within the molten salt (16).

5. The system of any one of claims 1-4 wherein the receiver (12) has a shape selected to maximize the capturing of incoming radiation (10).

6. The system of claim 5 wherein the receiver (12) includes three hexahedral chambers of increasing volume.

7. The system of any one of claims 1-6 wherein the receiver (12) has a small opening (22) to receive the incoming radiation (10).

8. The system of any one of claims 1-7 wherein the incoming radiation (10) is light.

9. The system of claim 7 further including a solar concentrator at the opening (22).

10. The system of any one of claims 1-9 wherein the receiver (12) includes fins (18) of high thermal conductivity material in thermal contact with the heat storage medium (16).

11. The system of claim 10 wherein the high thermal conductivity material is copper or other metal or graphite.

12. The system of any one of claims 1-11 wherein the receiver (12) is a black body cavity.
